(19) Europäisches Patentamt / European Patent Office / Office européen des brevets

(11) **EP 3 433 949 B1**

(12) **FASCICULE DE BREVET EUROPEEN**

(45) Date de publication et mention de la délivrance du brevet:
**23.06.2021 Bulletin 2021/25**

(21) Numéro de dépôt: **17716576.8**

(22) Date de dépôt: **22.03.2017**

(51) Int Cl.:
*H04B 7/208* (2006.01)    *H04B 7/212* (2006.01)
*H04L 27/26* (2006.01)    *H04W 56/00* (2009.01)

(86) Numéro de dépôt international:
**PCT/FR2017/050668**

(87) Numéro de publication internationale:
**WO 2017/162983 (28.09.2017 Gazette 2017/39)**

(54) **PROCÉDÉ DE CORRECTION D'UNE ERREUR SUR LA GÉNÉRATION DE FRÉQUENCE PAR UN TERMINAL D'UN SYSTÈME DE COMMUNICATION SANS FIL**

VERFAHREN ZUR KORREKTUR EINES FEHLERS IN DER FREQUENZERZEUGUNG DURCH EIN ENDGERÄT EINES DRAHTLOSKOMMUNIKATIONSSYSTEMS

METHOD FOR CORRECTING AN ERROR IN THE FREQUENCY GENERATION BY A TERMINAL OF A WIRELESS COMMUNICATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2016 FR 1652457**

(43) Date de publication de la demande:
**30.01.2019 Bulletin 2019/05**

(73) Titulaire: **SIGFOX**
**31670 Labège (FR)**

(72) Inventeur: **PONSARD, Benoit**
**31000 TOULOUSE (FR)**

(74) Mandataire: **Ipside**
**6, Impasse Michel Labrousse**
**31100 Toulouse (FR)**

(56) Documents cités:
**US-A- 5 450 617      US-A- 5 659 545**
**US-A1- 2014 003 403      US-B2- 7 471 720**

## Description

### DOMAINE TECHNIQUE

La présente invention appartient au domaine des systèmes de communication sans fil, et concerne plus particulièrement un procédé de correction d'erreur sur la génération d'une fréquence par des moyens de synthèse fréquentielle d'un terminal d'un système de communication sans fil terrestre.

### ÉTAT DE LA TECHNIQUE

La présente invention trouve une application particulièrement avantageuse, bien que nullement limitative, dans les systèmes de communication sans fil terrestres à bande ultra étroite. Par « bande ultra étroite » (« Ultra Narrow Band » ou UNB dans la littérature anglosaxonne), on entend que le spectre fréquentiel instantané des signaux radioélectriques, échangés entre le terminal et un réseau d'accès dudit système de communication sans fil, est de largeur fréquentielle inférieure à deux kilohertz, voire inférieure à un kilohertz.

De tels systèmes de communication sans fil UNB sont particulièrement adaptés pour des applications du type M2M (acronyme anglo-saxon pour « Machine-to-Machine ») ou du type « Internet des objets » (« Internet of Things » ou IoT dans la littérature anglosaxonne).

Dans le contexte par exemple de l'IoT, chaque objet de la vie de tous les jours a vocation à devenir un objet communicant, et est à cet effet équipé d'un terminal adapté à échanger des messages avec le réseau d'accès du système de communication sans fil UNB.

Dans un tel contexte, il est important de disposer de solutions qui soient à la fois faible coût (donc faible complexité) et en même temps faiblement consommatrices en énergie électrique. Ceci permet par exemple de rendre communicants beaucoup d'objets de la vie de tous les jours sans impacter leur coût de production de façon significative, et sans trop impacter leur autonomie lorsqu'ils sont opérés sur batterie.

Pour réduire le coût et la complexité, il est notamment possible d'équiper un terminal de moyens de synthèse fréquentielle peu performants. Il en résulte toutefois, dans le cas d'un système de communication sans fil UNB, que l'erreur sur la génération de fréquence par lesdits moyens de synthèse fréquentielle est susceptible d'être supérieure à la largeur fréquentielle du spectre fréquentiel instantané des signaux radioélectriques échangés entre le terminal et le réseau d'accès, voire très supérieure à celle-ci (au moins un facteur cinq).

Dans un système de communication sans fil UNB, les échanges de données sont essentiellement monodirectionnels. En l'occurrence, les terminaux émettent des messages à destination du réseau d'accès, sur un lien montant depuis les terminaux vers ledit réseau d'accès.

Dans le cas d'une utilisation de moyens de synthèse fréquentielle peu performants, le réseau d'accès est alors susceptible de recevoir, sur le lien montant, des messages émis sur des fréquences arbitraires, du fait notamment des erreurs introduites lors de la génération de fréquence. Toutefois, il suffit alors d'équiper le réseau d'accès d'une capacité de calcul suffisante pour permettre de détecter, sur le lien montant, un message émis sur n'importe quelle fréquence à l'intérieur d'une bande fréquentielle partagée par l'ensemble des terminaux, dite « bande de multiplexage ».

Par contre, la bande de multiplexage étant typiquement définie par des contraintes réglementaires, il convient d'assurer que les messages émis sur le lien montant sont effectivement émis sur une fréquence se trouvant à l'intérieur de ladite bande de multiplexage, malgré l'utilisation de moyens de synthèse fréquentielle peu performants. En effet, si un message montant doit être émis sur une fréquence, dite « fréquence théorique », se trouvant dans la bande de multiplexage mais proche d'une borne de celle-ci, alors il est tout à fait possible, du fait de l'erreur susceptible d'être introduite par les moyens de synthèse fréquentielle, que le message soit en réalité émis sur une fréquence se trouvant à l'extérieur de ladite bande de multiplexage. Par conséquent, il est nécessaire d'éviter les fréquences théoriques se trouvant trop proches des bornes de la bande de multiplexage, ce qui entraîne une utilisation sous-optimale de ladite bande de multiplexage.

Un tel mode de fonctionnement du système de communication sans fil UNB, dans lequel les échanges de données sont essentiellement monodirectionnels, est tout à fait satisfaisant pour de nombreuses applications, comme par exemple la télé-relève de compteurs de gaz, d'eau, d'électricité, la télésurveillance de bâtiments ou de maisons, etc.

Dans certaines applications cependant, il peut être avantageux de pouvoir également effectuer des échanges de données dans l'autre direction, à savoir sur un lien descendant depuis le réseau d'accès vers les terminaux. En particulier, il peut être avantageux d'émettre des signaux de diffusion, globale ou de groupe (respectivement « broadcast » ou « multicast » dans la littérature anglo-saxonne), comportant des données susceptibles d'intéresser tout ou partie des terminaux.

Toutefois, pour limiter le coût de fabrication des terminaux, la détection des signaux de diffusion doit pouvoir être réalisée de façon simple et économique d'un point de vue consommation en énergie électrique.

Or l'utilisation de moyens de synthèse fréquentielle peu performants rend plus difficile la détection des signaux de diffusion.

En effet, en considérant par exemple un signal de diffusion émis sur une fréquence prédéterminée, connue a priori du terminal, alors l'erreur introduite lors de la génération de cette fréquence par les moyens de synthèse fréquentielle dudit terminal, qui peut être très supérieure à la largeur fréquentielle du spectre fréquentiel instantané du signal de diffusion, est susceptible d'entraîner le non-détection dudit signal de diffusion.

Il est alors nécessaire, pour pouvoir détecter un signal de diffusion émis sur une fréquence prédéterminée, de rechercher ledit signal de diffusion à l'intérieur d'une bande fréquentielle, comportant ladite fréquence prédéterminée, de largeur fréquentielle très supérieure à celle du spectre fréquentiel instantané dudit signal de diffusion. Toutefois, cela entraîne une augmentation de la complexité du terminal, ainsi qu'une augmentation de la consommation en énergie électrique dudit terminal, ce qui rend cette solution peu adaptée pour des applications du type M2M ou IoT.

La demande de brevet US 2014/003403 A1 divulgue une méthode pour corriger une erreur fréquentielle dans un système de communication entre un terminal et une station de base d'un réseau d'accès. Le terminal calcule une erreur de fréquence sur un lien descendant (« *downlink composite frequency error δfDL* ») à partir d'un message précédemment reçu par le terminal en provenance de la station de base. Une erreur de fréquence sur le lien montant (« *uplink composite frequency error δfUL* ») est calculée par la station de base à partir d'un message émis par le terminal. L'erreur de fréquence δfUL sur le lien montant est ensuite communiquée au terminal par la station de base. Les erreurs de fréquence δfDL et δfUL peuvent alors être utilisées pour corriger les moyens de synthèse fréquentielle du terminal.

Le brevet US 5450617 A divulgue une méthode pour corriger la fréquence d'émission d'un signal par un terminal. Une erreur de fréquence en émission est calculée par le réseau d'accès à partir d'un signal transmis par le terminal sur une fréquence prédéterminée connue à la fois par le terminal et par le réseau d'accès. L'erreur de fréquence en émission est alors communiquée au terminal pour que le terminal puisse compenser cette erreur de fréquence en émission lors des émissions ultérieures de messages à destination du réseau d'accès.

Les méthodes divulguées respectivement dans la demande de brevet US 2014/003403 A1 et dans le brevet US 5450617 A reposent néanmoins sur le fait que la station de base connaît a priori la fréquence théorique d'émission utilisée par le terminal pour pouvoir calculer l'erreur de fréquence en émission.

**EXPOSÉ DE L'INVENTION**

La présente invention a pour objectif de remédier à tout ou partie des limitations des solutions de l'art antérieur, notamment celles exposées ci-avant, en proposant une solution qui permette de corriger l'erreur sur la génération de fréquence par des moyens de synthèse fréquentielle tout en limitant l'impact sur la complexité et le coût de fabrication des terminaux.

A cet effet, et selon un premier aspect, l'invention concerne un procédé de correction d'une erreur sur la génération d'une fréquence par des moyens de synthèse fréquentielle d'un terminal d'un système de communication sans fil terrestre selon la revendication 1.

Ainsi, pour corriger l'erreur sur la génération de fréquence, le terminal émet à destination du réseau d'accès un message d'interrogation qui est utilisé par ledit réseau d'accès pour estimer l'erreur introduite lors de la génération de fréquence par les moyens de synthèse fréquentielle dudit terminal. Une fois l'erreur estimée, le réseau d'accès envoie une information de correction au terminal, à partir de laquelle le terminal peut corriger l'erreur sur la génération de fréquence par les moyens de synthèse fréquentielle.

En d'autres termes, la correction de l'erreur sur la génération de fréquence par les moyens de synthèse fréquentielle du terminal est répartie entre le réseau d'accès et ledit terminal :

- le réseau d'accès estime, à partir du message d'interrogation reçu du terminal, l'erreur à corriger sur la génération de fréquence,
- le terminal applique la correction permettant de compenser l'erreur estimée par ledit réseau d'accès.

Par conséquent, la complexité additionnelle requise au niveau du terminal, pour corriger l'erreur sur la génération de fréquence, est très réduite puisque l'estimation de ladite erreur, qui correspond à la tâche nécessitant la plus grande capacité de calcul, est réalisée par le réseau d'accès. L'impact sur la complexité et le coût de fabrication du terminal est donc très réduit.

Dans des modes particuliers de mise en œuvre, le procédé de correction d'erreur sur la génération de fréquence peut comporter en outre l'une ou plusieurs des caractéristiques suivantes, prises isolément ou selon toutes les combinaisons techniquement possibles.

Dans des modes particuliers de mise en œuvre, le message d'interrogation comporte une information permettant au réseau d'accès de déterminer la fréquence théorique sur laquelle ledit message d'interrogation a été théoriquement émis par le terminal.

Dans des modes particuliers de mise en œuvre, l'information de correction reçue du réseau d'accès est utilisée par le terminal pour générer une fréquence de réception par le terminal d'un signal de diffusion émis par le réseau d'accès.

Dans des modes particuliers de mise en œuvre, l'information de correction reçue du réseau d'accès est utilisée par le terminal pour générer une fréquence d'émission par le terminal d'un message à destination du réseau d'accès.

Dans des modes particuliers de mise en œuvre, l'information de correction comporte l'erreur estimée par le réseau d'accès.

Dans des modes particuliers de mise en œuvre, l'information de correction comporte une valeur corrigée d'une fréquence de réception par le terminal d'un signal de diffusion émis par le réseau d'accès.

Selon un second aspect, l'invention concerne un système de communication sans fil terrestre selon la revendication 5.

Dans des modes particuliers de réalisation, le système de communication sans fil terrestre peut comporter en outre l'une ou plusieurs des caractéristiques suivantes, prises isolément ou selon toutes les combinaisons techniquement possibles.

Dans des modes particuliers de réalisation, l'information de correction reçue du réseau d'accès est utilisée par le terminal pour générer une fréquence de réception par le terminal d'un signal de diffusion émis par le réseau d'accès.

Dans des modes particuliers de réalisation, l'information de correction reçue du réseau d'accès est utilisée par le terminal pour générer une fréquence d'émission par le terminal d'un message à destination du réseau d'accès.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un exemple de réalisation d'un système de communication sans fil terrestre,
- Figure 2 : des spectres fréquentiels illustrant des exemples de problèmes susceptibles d'être introduits par une erreur sur la génération de fréquence par des moyens de synthèse fréquentielle d'un terminal,
- Figure 3 : un diagramme représentant les principales étapes d'un procédé de correction d'erreur sur la génération de fréquence par des moyens de synthèse fréquentielle d'un terminal.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

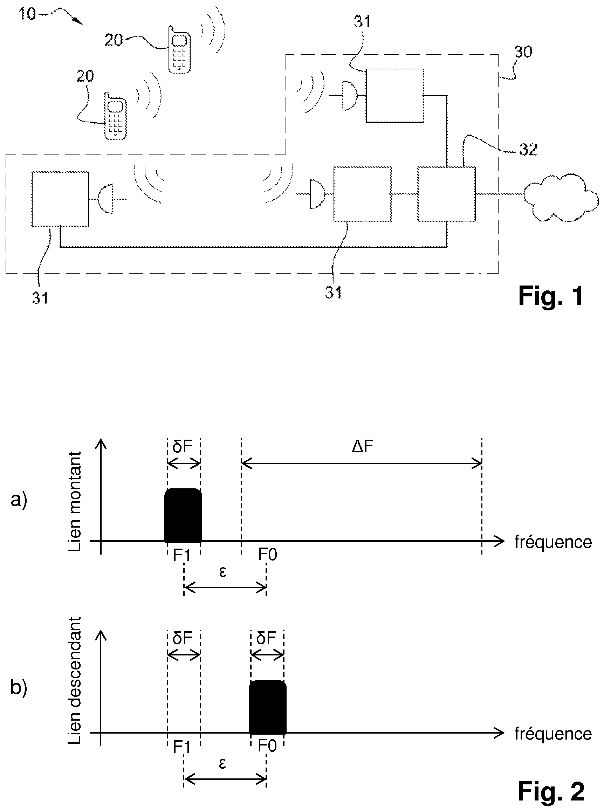

La figure 1 représente schématiquement un système 10 de communication sans fil terrestre, comportant plusieurs terminaux 20 et un réseau d'accès 30 terrestre comportant plusieurs stations de base 31.

Les terminaux 20 et les stations de base 31 du réseau d'accès 30 échangent des données sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).

Dans la suite de la description, on se place de manière non limitative dans le cas où le système 10 de communication sans fil terrestre est à bande ultra étroite. Par « bande ultra étroite » (« Ultra Narrow Band » ou UNB dans la littérature anglo-saxonne), on entend que le spectre fréquentiel instantané des signaux radioélectriques échangés entre les terminaux 20 et le réseau d'accès 30 est de largeur fréquentielle inférieure à deux kilohertz, voire inférieure à un kilohertz.

Les terminaux 20 sont adaptés à émettre des messages comportant des données sur un lien montant à destination du réseau d'accès 30, et chaque station de base 31 est adaptée à recevoir les messages des terminaux 20 qui se trouvent à sa portée. Les données de chaque message ainsi reçu sont par exemple transmises à un serveur 32 du réseau d'accès 30, éventuellement accompagné d'autres informations comme un identifiant de la station de base 31 qui a reçu ledit message, le niveau de puissance mesuré dudit message, la date de réception dudit message, etc.

En outre, le réseau d'accès 30 est également adapté à émettre, par l'intermédiaire des stations de base 31, des messages comportant des données sur un lien descendant à destination des terminaux 20, lesquels sont adaptés à les recevoir. Les messages émis sur le lien descendant sont par exemple émis à l'initiative du réseau d'accès 30, ou en réponse à des messages reçus sur le lien montant. Par exemple, le réseau d'accès 30 peut répondre à chaque message reçu, ou répondre uniquement à certains messages reçus (par exemple répondre uniquement après avoir reçu un nombre prédéfini de messages d'un même terminal 20, ou répondre uniquement à des messages comportant une requête à cet effet, etc.).

Suivant le cas considéré, un message émis par le réseau d'accès 30 sur le lien descendant peut être un signal de diffusion globale (« broadcast » dans la littérature anglo-saxonne) ou de groupe (« multicast » dans la littérature anglo-saxonne), ou bien s'inscrire dans le cadre d'une communication point à point entre le réseau d'accès 30 et un terminal 20 particulier.

Les messages d'un terminal 20 sont émis sur le lien montant sur des fréquences à l'intérieur d'une bande fréquentielle prédéterminée, partagée par l'ensemble desdits terminaux 20, dite « bande de multiplexage ». De même, sur le lien descendant, les messages émis par le réseau d'accès 30 sont émis sur des fréquences à l'intérieur d'une bande de multiplexage prédéterminée, partagée par l'ensemble des terminaux 20, qui peut être différente de la bande de multiplexage considérée sur le lien montant.

Pour émettre et recevoir des messages, chaque terminal 20 comporte des moyens de synthèse fréquentielle, qui génèrent la fréquence sur laquelle un message doit être émis ou reçu. De tels moyens de synthèse fréquentielle sont considérés comme connus de l'homme de l'art, et comportent par exemple un oscillateur local contrôlé en tension, un mélangeur, etc.

En pratique, un terminal 20 cherche à générer une fréquence, dite « fréquence théorique », qui correspond à la fréquence souhaitée en sortie des moyens de synthèse fréquentielle. Toutefois, cette fréquence théorique n'est générée que dans la limite de précision des moyens de synthèse fréquentielle, de sorte que la fréquence réelle obtenue en sortie des moyens de synthèse fréquentielle est généralement différente de la fréquence théorique. En d'autres termes, si l'on désigne par F0 la fréquence théorique à générer par les moyens de synthèse fréquentielle, alors la fréquence réelle F1 obtenue en sortie des moyens de synthèse fréquentielle est donnée par l'expression suivante :

$$F1 = F0 + \varepsilon$$

expression dans laquelle $\varepsilon$ correspond à l'erreur introduite lors de la génération de la fréquence théorique F0 par les moyens de synthèse fréquentielle.

Tel qu'indiqué précédemment, dans le cas d'un système 10 de communication sans fil terrestre UNB, en particulier si les moyens de synthèse fréquentielle du terminal 20 sont peu performants, l'erreur $\varepsilon$ est susceptible d'être supérieure à la largeur fréquentielle $\delta F$ du spectre fréquentiel des signaux radioélectriques émis ou reçus par ledit terminal 20, voire très supérieure à celle-ci (au moins un facteur cinq).

La figure 2 représente schématiquement, dans le domaine fréquentiel, différents problèmes liés à l'erreur $\varepsilon$ introduite par les moyens de synthèse fréquentielle. Plus particulièrement, la partie a) de la figure 2 représente schématiquement le spectre fréquentiel d'un message émis par un terminal 20 sur le lien montant, tandis que la partie b) de la figure 2 représente schématiquement le spectre fréquentiel d'un message émis par le réseau d'accès 30 sur le lien descendant, par exemple un signal de diffusion.

La partie a) de la figure 2 représente la bande de multiplexage $\Delta F$ utilisée sur le lien montant. Dans l'exemple représenté, le terminal 20 cherche à générer une fréquence théorique F0 qui se trouve proche d'une borne de la bande de multiplexage $\Delta F$. Du fait de l'erreur $\varepsilon$ introduite, la fréquence réelle F1 générée par les moyens de synthèse fréquentielle se trouve, tel qu'illustré par la partie a) de la figure 2, en dehors de ladite bande de multiplexage $\Delta F$. Tel qu'indiqué précédemment, afin d'éviter tout risque de générer une fréquence en dehors de la bande de multiplexage $\Delta F$, les fréquences théoriques trop proches des bornes de la bande de multiplexage $\Delta F$ sont évitées, ce qui entraîne une utilisation sous-optimale de ladite bande de multiplexage $\Delta F$.

La partie b) de la figure 2 représente un signal de diffusion émis par le réseau d'accès 30 sur une fréquence F0 prédéterminée, connue a priori du terminal 20. Afin de recevoir ce message, le terminal 20 cherche à générer une fréquence théorique F0 mais, du fait de l'erreur $\varepsilon$ introduite, génère une fréquence réelle F1 différente de la fréquence théorique F0. Il en résulte que le terminal 20, croyant écouter le lien descendant sur la fréquence théorique F0, écoute en réalité sur la fréquence réelle F1 et ne peut pas recevoir le signal de diffusion émis par le réseau d'accès 30.

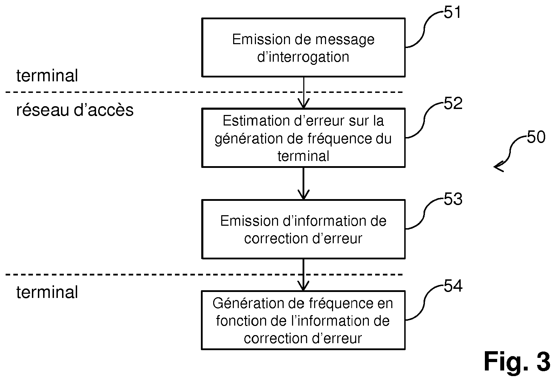

La figure 3 représente les principales étapes d'un procédé 50 de correction de l'erreur $\varepsilon$ sur la génération de fréquence par les moyens de synthèse fréquentielle du terminal 20. Tel qu'illustré par la figure 3, le procédé 50 de correction de l'erreur $\varepsilon$ comporte des étapes de :

- 51 émission, par le terminal 20 et à destination du réseau d'accès 30, d'un message d'interrogation sur une fréquence générée par les moyens de synthèse fréquentielle,
- 52 estimation, par le réseau d'accès 30, de l'erreur $\varepsilon$ sur la génération de la fréquence du message d'interrogation en fonction d'une fréquence théorique d'émission du message d'interrogation par le terminal 20 et d'une fréquence réelle de réception dudit message d'interrogation par le réseau d'accès 30,
- 53 émission, par le réseau d'accès 30 et à destination dudit terminal 20, d'un message de réponse comportant une information de correction de ladite erreur estimée,
- 54 génération de fréquence, par les moyens de synthèse fréquentielle du terminal 20, en fonction de l'information de correction reçue du réseau d'accès 30.

Ainsi, tel qu'illustré par la figure 3, les différentes étapes du procédé 50 de correction de l'erreur $\varepsilon$ sont réparties entre le terminal 20 et le réseau d'accès 30 du système 10 de communication sans fil UNB.

Plus particulièrement, le terminal 20 exécute l'étape 51 d'émission du message d'interrogation et l'étape 54 de génération de fréquence.

A cet effet, le terminal 20 comporte par exemple un module de traitement (non représenté sur les figures), comportant un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre lesdites étapes 51 d'émission et 54 de génération de fréquence. Dans une variante, le module de traitement comporte un ou des circuits logiques programmables (FPGA, PLD, etc.), et/ou un ou des circuits intégrés spécialisés (ASIC), et/ou un ensemble de composants électroniques discrets, etc., adaptés à mettre en œuvre tout ou partie desdites étapes. Le terminal 20 comporte en outre des moyens de communication sans fil, considérés comme connus de l'homme de l'art, permettant audit terminal d'émettre et de recevoir des messages sous la forme de signaux radioélectriques.

En d'autres termes, le terminal 20 comporte un ensemble de moyens configurés de façon logicielle (produit programme d'ordinateur spécifique) et/ou matérielle (FPGA, PLD, ASIC, composants électroniques discrets, etc.) pour mettre en œuvre les étapes 51 d'émission du message d'interrogation et 52 de génération de fréquence du procédé 50 de correction d'erreur ε.

L'étape 52 d'estimation de l'erreur ε et l'étape 53 d'émission de l'information de correction à destination du terminal 20 sont exécutées par le réseau d'accès 30, en l'occurrence par au moins une station de base 31 du réseau d'accès 30, et éventuellement par le serveur 32.

Dans la suite de la description, on se place de manière non limitative dans le cas où les étapes 52 d'estimation de l'erreur ε et 53 d'émission de l'information de correction sont exécutées par les stations de base 31 du réseau d'accès 30. A cet effet, chaque station de base 31 comporte par exemple un module de traitement (non représenté sur les figures), comportant par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre les étapes 52 d'estimation de l'erreur ε et 53 d'émission de l'information de correction. Dans une variante, le module de traitement comporte un ou des circuits logiques programmables (FPGA, PLD, etc.), et/ou un ou des circuits intégrés spécialisés (ASIC), et/ou un ensemble de composants électroniques discrets, etc., adaptés à mettre en œuvre tout ou partie desdites étapes. Chaque station de base 31 comporte en outre des moyens de communication sans fil, considérés comme connus de l'homme de l'art, permettant à ladite station de base d'émettre et de recevoir des messages sous la forme de signaux radioélectriques.

En d'autres termes, chaque station de base 31 du réseau d'accès 30 comporte des moyens configurés de façon logicielle (produit programme d'ordinateur spécifique) et/ou matérielle (FPGA, PLD, ASIC, composants électroniques discrets, etc.) pour mettre en œuvre les étapes 52 d'estimation de l'erreur ε et 53 d'émission de l'information de correction.

On décrit à présent des exemples non limitatifs de mise en œuvre des différentes étapes du procédé 50 de correction d'erreur ε.

A) Etape 51 d'émission du message d'interrogation

L'étape 51 d'émission, par le terminal 20, du message d'interrogation vise à faire parvenir au réseau d'accès 30 un message affecté par l'erreur ε sur la génération de fréquence par les moyens de synthèse fréquentielle dudit terminal 20, afin de permettre au réseau d'accès 30 d'estimer l'erreur ε sur la génération de la fréquence d'émission dudit message d'interrogation.

Le message d'interrogation peut être un message dédié, c'est à dire un message utilisé uniquement pour permettre d'estimer l'erreur ε, ou bien un message utilisé également à d'autres fins. Notamment, le message d'interrogation peut être un message comportant des données qui sont transmises au serveur 32, qui est également utilisé par la station de base 31 ayant reçu ledit message d'interrogation pour estimer l'erreur ε sur la génération de la fréquence dudit message d'interrogation.

Pour estimer l'erreur ε sur la génération de la fréquence du message d'interrogation, le réseau d'accès 30 doit pouvoir déterminer la fréquence théorique sur laquelle le terminal 20 a essayé d'émettre le message d'interrogation, c'est-à-dire la fréquence sur laquelle le message d'interrogation aurait été émis par le terminal 20 en l'absence d'erreur ε.

Par exemple, la fréquence théorique sur laquelle ledit message d'interrogation a été théoriquement émis par le terminal 20 est une fréquence prédéterminée connue a priori du réseau d'accès 30, c'est-à-dire connue avant l'émission du message d'interrogation par le terminal 20. La fréquence théorique est alors, de préférence, une fréquence constante prédéfinie, par exemple sensiblement au milieu de la bande de multiplexage, ou encore une fréquence préalablement négociée entre le réseau d'accès et les terminaux 20.

Suivant d'autres exemples, le réseau d'accès 30 ne connait pas nécessairement la fréquence théorique sur lequel le terminal 20 émet le message d'interrogation. Notamment, dans un système de communication sans fil UNB, les terminaux 20 émettent généralement leurs messages de façon asynchrone. Par « émettre de façon asynchrone », on entend que les terminaux 20 déterminent de manière autonome quand ils émettent et/ou sur quelle fréquence ils émettent, sans coordination desdits terminaux 20 entre eux et avec les stations de base 31 du réseau d'accès 30. Dans le cas où les terminaux 20 sont au moins asynchrones en fréquences, les messages sont émis sur des fréquences non connues a priori du réseau d'accès 30, et la fréquence sur laquelle un message d'interrogation est émis par un terminal 20 n'est donc pas connue a priori du réseau d'accès 30. Une station de base 31 écoute par exemple l'ensemble de la bande de multiplexage, et peut détecter à l'intérieur de celle-ci un message d'interrogation sans savoir sur quelle fréquence théorique ledit message d'interrogation a été théoriquement émis.

Dans le cas où le réseau d'accès 30 ne connait pas a priori la fréquence théorique d'émission du message d'interrogation, ledit message d'interrogation comporte une information permettant au réseau d'accès 30 de déterminer la fréquence théorique sur laquelle ledit message d'interrogation a été théoriquement émis par le terminal 20. Cette information peut être une mention explicite de la valeur de ladite fréquence théorique. Alternativement, cette information peut être une mention implicite de ladite valeur de la dite fréquence théorique. Par exemple, si le terminal 20 sélectionne la valeur de ladite fréquence théorique selon une méthode prédéterminée et en fonction de certaines informations (numéro de séquence du message d'interrogation, identifiant dudit terminal, etc.), alors ces informations sont préférentiellement incluses dans le message d'interrogation pour permettre au réseau d'accès 30 de déterminer la valeur de la fréquence théorique en appliquant la même méthode de sélection que le terminal 20. B) Etape 52 d'estimation de l'erreur ε

L'étape 52 d'estimation de l'erreur ε est exécutée par le réseau d'accès 30, en l'occurrence par au moins une station de base 31 dudit réseau d'accès 30 dans l'exemple considéré.

Au cours de l'étape 52 d'estimation de l'erreur ε, le réseau d'accès 30 mesure la fréquence réelle sur laquelle le message d'interrogation été reçu par ledit réseau d'accès 30, qui correspond à une estimation de la fréquence réelle sur laquelle ledit message d'interrogation a été émis par le terminal 20. La fréquence réelle mesurée est ensuite comparée à la fréquence théorique sur laquelle le message d'interrogation a été théoriquement émis par le terminal 20. L'erreur ε est par exemple estimée selon l'expression suivante :

$$\varepsilon' = F1' - F0$$

expression dans laquelle :

- ε' correspond à l'estimation de l'erreur ε,
- F1' correspond à la mesure de la fréquence réelle sur laquelle le message d'interrogation a été reçu par le réseau d'accès 30, qui correspond à une estimation de la fréquence réelle F1 d'émission du message d'interrogation par le terminal 20.

Dans le cas où la fréquence théorique F0 n'est pas connue a priori du réseau d'accès 30, l'étape 52 d'estimation de l'erreur ε comporte de préférence l'extraction de l'information, incluse dans le message d'interrogation, permettant de déterminer la fréquence théorique F0 et la détermination de ladite fréquence théorique F0 en fonction de ladite information (numéro de séquence du message d'interrogation, identifiant dudit terminal, etc.) en appliquant la même méthode de sélection que le terminal 20.

Il est à noter que, en pratique, la fréquence réelle de réception du message d'interrogation par le réseau d'accès 30 peut être différente de la fréquence réelle d'émission dudit message d'interrogation par le terminal 20, par exemple dans le cas où le terminal 20 est mobile. Le cas échéant, la différence entre la fréquence réelle d'émission par le terminal 20 et la fréquence réelle de réception par le réseau d'accès 30, si elle ne peut pas être négligée, peut être estimée selon toute méthode connue de l'homme de l'art.

### C) Etape 53 d'émission de l'information de correction

L'étape 53 d'émission de l'information de correction est exécutée par le réseau d'accès 30, en l'occurrence par au moins une station de base 31 dudit réseau d'accès 30 dans l'exemple considéré.

Au cours de l'étape 53 d'émission de l'information de correction, le réseau d'accès 30 détermine, en fonction de la valeur ε' estimée, l'information de correction permettant au terminal 20 de corriger l'erreur ε au cours des générations ultérieures de fréquence.

Par exemple, l'information de correction correspond directement à la valeur ε' estimée de ladite erreur. Dans un tel cas, le terminal 20 peut corriger la génération de fréquence, par les moyens de synthèse fréquentielle, en générant une fréquence (F0 - ε') lorsque ledit terminal 20 souhaite générer une fréquence théorique F0.

Suivant un autre exemple, dans le cas où la correction vise principalement à permettre la réception, par le terminal 20, d'un signal de diffusion émis par le réseau d'accès 30, l'information de correction correspond à une valeur corrigée d'une fréquence de réception par le terminal 20 dudit signal de diffusion émis par le réseau d'accès 30. Par exemple, si le réseau d'accès 30 émet le signal de diffusion sur une fréquence F2, alors l'information de correction peut correspondre à la valeur corrigée (F2 - ε') qui est telle que le terminal 20, cherchant à générer la fréquence théorique (F2 - ε'), génèrera une fréquence réelle sensiblement égale à la fréquence F2. De telles dispositions sont avantageuses si le terminal 20 ne sait pas a priori sur quelle fréquence le réseau d'accès 30 émet le signal de diffusion. En effet, l'information de correction englobe alors en une seule information plus compacte à la fois la valeur F2 de la fréquence d'émission du signal de diffusion et la valeur ε' estimée de l'erreur de génération. Rien n'exclut cependant, suivant d'autres exemples, d'inclure séparément dans le message de réponse à la fois la valeur ε' estimée de l'erreur de génération et la valeur F2 de la fréquence d'émission dudit signal de diffusion par le réseau d'accès 30.

Dans des modes particuliers de mise en œuvre, le signal de diffusion comporte par exemple N signaux modulés émis sur N sous-porteuses respectives différentes présentant des écarts fréquentiels $\Delta Fn$ ($1 \leq n \leq N$) prédéfinis par rapport à une fréquence F3 prédéterminée. Par exemple, un premier signal modulé est émis sur une sous-porteuse ($F3 + \Delta F_1$), un second signal modulé est émis sur une sous-porteuse ($F3 + \Delta F_2$), etc. Chaque signal modulé émis sur une sous-porteuse est par exemple destiné à un groupe particulier de terminaux 20, et un terminal 20 ne sait pas a priori le signal modulé qui lui est destiné et donc ne connaît pas a priori la sous-porteuse qu'il doit écouter. Dans un tel cas, l'information de correction correspond avantageusement à la valeur corrigée ($F3 + \Delta Fn - \varepsilon'$) de la sous-porteuse que doit écouter le terminal 20 (par exemple déterminée par le réseau d'accès 30 en fonction d'un identifiant du terminal 20 inclus dans le message d'interrogation) ou, si la fréquence F3 est connue a priori dudit terminal 20, à la valeur corrigée ($\Delta Fn - \varepsilon'$) de l'écart fréquentiel de la sous-porteuse à écouter par rapport à la fréquence F3. En d'autres termes, si le signal modulé à écouter est celui émis sur la sous-porteuse (F3 + ΔF2), alors l'information de correction correspond avantageusement à (F3 + ΔF2 - ε') ou à (ΔF2 - ε'). Ainsi, l'information de correction englobe en une seule information plus compacte à la fois la valeur absolue ou relative de la sous-porteuse à écouter et la valeur ε' estimée de l'erreur de génération.

Il est à noter que l'erreur introduite lors de la génération de fréquence peut varier avec la fréquence théorique considérée. Le cas échéant, notamment, le message de correction peut comporter plusieurs informations de correction, par exemple associées à différentes fréquences théoriques à l'intérieur de la bande de multiplexage. Ces différentes informations de correction peuvent être déterminées à partir d'un même message d'interrogation, en considérant un modèle prédéterminé de variation de l'erreur en fonction de la fréquence théorique, permettant d'extrapoler la valeur de l'erreur introduite pour l'une quelconque des fréquences théoriques à l'intérieur de la bande de multiplexage (du lien montant et/ou du lien descendant) à partir de la valeur ε' estimée pour une seule fréquence théorique F0 de la bande de multiplexage du lien montant. Alternativement ou en complément, il est possible de déterminer ces différentes informations de correction à partir de plusieurs messages d'interrogation émis par le même terminal 20 sur des fréquences théoriques respectives différentes.

Dans la suite de la description, on se place de manière non limitative dans le cas où l'erreur ε introduite lors de la génération de fréquence est sensiblement constante dans toute la bande de multiplexage (du lien montant et/ou lien descendant), de sorte que le message d'interrogation peut ne comporter qu'une seule information de correction.

### D) Etape 54 de génération de fréquence

Au cours de l'étape 54, le terminal 20 génère une fréquence, par les moyens de synthèse fréquentielle, en tenant compte de l'information de correction reçue du réseau d'accès 30.

Par exemple, si l'information de correction correspond à la valeur ε' estimée de l'erreur introduite par les moyens de synthèse fréquentielle, alors le terminal 20 génère, tel qu'indiqué précédemment, une fréquence (F0 - ε') lorsque ledit terminal 20 souhaite générer une fréquence théorique F0.

Si l'information de correction correspond à une valeur corrigée d'une fréquence de réception (ou d'émission) par le terminal 20, alors le terminal 20 génère une fréquence théorique égale à la valeur corrigée indiquée par l'information de correction reçue du réseau d'accès 30.

L'information de correction reçue est par exemple utilisée pour générer une fréquence de réception par le terminal 20 d'un signal de diffusion émis par le réseau d'accès 30 et/ou pour générer une fréquence d'émission par le terminal 20 d'un message à destination du réseau d'accès 30. L'information de correction reçue peut être utilisée pour générer la fréquence d'émission et/ou de réception d'un ou de plusieurs messages, et est par exemple utilisée pendant une durée prédéterminée de validité de ladite information de correction, à l'issue de laquelle le terminal 20 peut reprendre les étapes du procédé 50 de correction de l'erreur ε en émettant un nouveau message d'interrogation à destination du réseau d'accès 30.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant un système de communication sans fil terrestre UNB et des moyens de synthèse fréquentielle peu performants, de sorte que l'erreur susceptible d'être introduite peut être supérieure à la largeur fréquentielle du spectre fréquentiel instantané des messages émis ou reçus par le terminal 20, voire très supérieure à celle-ci. Rien n'exclut, suivant d'autres exemples, de considérer un système de communication sans fil terrestre qui n'est pas à bande ultra-étroite et/ou des moyens de synthèse fréquentielle qui ne sont pas peu performants. En particulier, l'invention est également applicable lorsque l'erreur susceptible d'être introduite est inférieure à la largeur fréquentielle du spectre fréquentiel instantané des messages échangés entre le réseau d'accès 30 et les terminaux 20.

La description ci-avant illustre clairement que par ses différentes caractéristiques et leurs avantages, la présente invention atteint les objectifs qu'elle s'était fixés. En particulier, selon l'invention, l'erreur ε introduite par les moyens de synthèse fréquentielle d'un terminal 20 est estimée par le réseau d'accès 30, ce qui limite l'impact sur la complexité dudit terminal 20. Cette erreur est ensuite corrigée par le terminal 20 en fonction d'une information de correction reçue du réseau d'accès 30, ce qui permet notamment d'améliorer la détection de signaux de diffusion émis par le réseau d'accès 30 et/ou d'améliorer l'utilisation de la bande de multiplexage du lien montant. En particulier, un procédé de réception d'un signal de diffusion par un terminal 20 comporte tout d'abord l'émission par ledit terminal 20 d'un message d'interrogation à destination du réseau d'accès 30, afin de recevoir un message de réponse. Le message de réponse comporte une information de correction à utiliser pour recevoir ledit signal de diffusion et éventuellement une information relative à une fréquence d'émission dudit signal de diffusion par le réseau d'accès 30, si celle-ci n'est pas connue a priori dudit terminal 20, ce qui facilite la détection du signal de diffusion par le terminal 20.

### Revendications

**1.** Procédé (50) de correction d'une erreur sur la génération d'une fréquence par des moyens de synthèse fréquentielle d'un terminal (20) d'un système (10) de communication sans fil terrestre, ledit système de communication sans fil comportant un réseau d'accès (30) adapté à échanger des données avec ledit terminal, ledit procédé (50) comportant : :

- l'émission (51), par le terminal (20) et à destination du réseau d'accès (30), d'un message d'interrogation sur une fréquence générée par les moyens de synthèse fréquentielle,
- l'estimation (52), par le réseau d'accès (30), de l'erreur sur la génération de la fréquence du message d'interrogation en fonction d'une fréquence théorique d'émission du message d'interrogation par le terminal (20) et d'une fréquence réelle de réception dudit message d'interrogation par le réseau d'accès (30),
- l'émission (53), par le réseau d'accès (30) et à destination dudit terminal (20), d'un message de réponse comportant une information de correction de ladite erreur estimée,
- la génération (54), par les moyens de synthèse fréquentielle du terminal (20) et en fonction de l'information de correction reçue du réseau d'accès (30), d'une fréquence de réception par le terminal (20) d'un signal de diffusion émis par le réseau d'accès (30),

**caractérisé en ce que,** la fréquence théorique d'émission du message d'interrogation n'étant pas connue a priori du réseau d'accès (30), ledit message d'interrogation comporte une information permettant audit réseau d'accès (30) de déterminer la fréquence théorique sur laquelle ledit message d'interrogation a été théoriquement émis par le terminal (20).

2. Procédé (50) selon la revendication 1, dans lequel l'information de correction reçue du réseau d'accès (30) est utilisée par le terminal (20) pour générer en outre une fréquence d'émission par le terminal (20) d'un message à destination du réseau d'accès (30).

3. Procédé (50) selon l'une des revendications précédentes, dans lequel l'information de correction comporte l'erreur estimée par le réseau d'accès (30).

4. Procédé (50) selon l'une des revendications précédentes, dans lequel l'information de correction comporte une valeur corrigée de la fréquence de réception par le terminal (20) du signal de diffusion émis par le réseau d'accès (30).

5. Système (10) de communication sans fil terrestre comportant un réseau d'accès (30) et au moins un terminal (20), ledit terminal (20) comportant des moyens de synthèse fréquentielle susceptibles d'introduire une erreur sur la génération d'une fréquence, dans lequel :

- le terminal (20) comporte des moyens configurés pour émettre, à destination du réseau d'accès (30), un message d'interrogation sur une fréquence générée par les moyens de synthèse fréquentielle,
- le réseau d'accès (30) comporte des moyens configurés pour estimer l'erreur sur la génération de la fréquence du message d'interrogation en fonction d'une fréquence théorique d'émission du message d'interrogation par le terminal (20) et d'une fréquence réelle de réception dudit message d'interrogation par le réseau d'accès (30),
- le réseau d'accès (30) comporte des moyens configurés pour émettre, à destination dudit terminal (20), un message de réponse comportant une information de correction de ladite erreur estimée,
- le terminal (20) comporte des moyens configurés pour générer, par les moyens de synthèse fréquentielle dudit terminal (20) et en fonction de l'information de correction reçue du réseau d'accès (30), une fréquence de réception par le terminal (20) d'un signal de diffusion émis par le réseau d'accès (30),

ledit système étant **caractérisé en ce que** la fréquence théorique d'émission du message d'interrogation n'étant pas connue a priori du réseau d'accès (30), ledit message d'interrogation comporte une information permettant audit réseau d'accès (30) de déterminer la fréquence théorique sur laquelle ledit message d'interrogation a été théoriquement émis par le terminal (20).

6. Système (10) selon la revendication 5, dans lequel l'information de correction reçue du réseau d'accès (30) est utilisée par le terminal (20) pour générer en outre une fréquence d'émission par le terminal (20) d'un message à destination du réseau d'accès (30).

**Patentansprüche**

1. Verfahren (50) zur Korrektur eines Fehlers bei der Erzeugung einer Frequenz durch Frequenzsynthesemittel eines Endgerätes (20) eines drahtlosen terrestrischen Kommunikationssystems (10), wobei das drahtlose Kommunikationssystem ein Zugangsnetzwerk (30) beinhaltet, das angepasst ist, um Daten mit dem Endgerät auszutauschen, wobei das Verfahren (50) Folgendes beinhaltet:

- Senden (51), durch das Endgerät (20), und an das Zugangsnetzwerk (30), einer Abfragenachricht über eine durch die Frequenzsynthesemittel erzeugte Frequenz,

- Schätzen (52), durch das Zugangsnetzwerk (30) des Fehlers bei der Erzeugung der Frequenz der Abfragenachricht in Abhängigkeit von einer theoretischen Sendefrequenz der Abfragenachricht durch das Endgerät (20) und einer tatsächlichen Empfangsfrequenz der Abfragenachricht durch das Zugangsnetzwerk (30),

- Senden (53), durch das Zugangsnetzwerk (30) und an das Endgerät (20), einer Antwortnachricht, die eine Korrekturinformation des geschätzten Fehlers beinhaltet,

- Erzeugen (54), durch die Frequenzsynthesemittel des Endgerätes (20), und in Abhängigkeit von der von dem Zugangsnetzwerk (30) empfangenen Korrekturinformation, einer Empfangsfrequenz durch das Endgerät (20) eines durch das Zugangsnetzwerk (30) gesendeten Verbreitungssignals,

**dadurch gekennzeichnet, dass**, da die theoretische Sendefrequenz der Abfragenachricht von vornherein von dem Zugangsnetzwerk (30) nicht bekannt ist, die Abfragenachricht eine Information beinhaltet, die es dem Zugangsnetzwerk (30) ermöglicht, die theoretische Frequenz, mit der die Abfragenachricht theoretisch durch das Endgerät (20) gesendet worden ist, zu bestimmen.

2. Verfahren (50) nach Anspruch 1, wobei die von dem Zugangsnetzwerk (30) empfangene Korrekturinformation von dem Endgerät (20) verwendet wird, um weiter eine Sendefrequenz durch das Endgerät (20) einer Nachricht an das Zugangsnetzwerk (30) zu erzeugen.

3. Verfahren (50) nach einem der vorstehenden Ansprüche, wobei die Korrekturinformation den durch das Zugangsnetzwerk (30) geschätzten Fehler beinhaltet.

4. Verfahren (50) nach einem der vorstehenden Ansprüche, wobei die Korrekturinformation einen korrigierten Wert der Empfangsfrequenz durch das Endgerät (20) des Verbreitungssignals beinhaltet, das durch das Zugangsnetzwerk (30) gesendet wird.

5. Drahtloses terrestrisches Kommunikationssystem (10), das ein Zugangsnetzwerk (30) und mindestens ein Endgerät (20) beinhaltet, wobei das Endgerät (20) Frequenzsynthesemittel beinhaltet, die in der Lage sind, einen Fehler bei der Erzeugung einer Frequenz einzubringen, wobei:

- das Endgerät (20) Mittel beinhaltet, die konfiguriert sind, um an das Zugangsnetzwerk (30) eine Abfragenachricht über eine durch die Frequenzsynthesemittel erzeugte Frequenz zu senden,

- das Zugangsnetzwerk (30) Mittel beinhaltet, die konfiguriert sind, um den Fehler bei der Erzeugung der Frequenz der Abfragenachricht in Abhängigkeit von einer theoretischen Sendefrequenz der Abfragenachricht durch das Endgerät (20) und einer tatsächlichen Empfangsfrequenz der Abfragenachricht durch das Zugangsnetzwerk (30) zu schätzen,

- das Zugangsnetzwerk (30) Mittel beinhaltet, die konfiguriert sind, um an das Endgerät (20) eine Antwortnachricht zu senden, die eine Korrekturinformation des geschätzten Fehlers beinhaltet,

- das Endgerät (20) Mittel beinhaltet, die konfiguriert sind, um durch die Frequenzsynthesemittel des Endgerätes (20) und in Abhängigkeit von der von dem Zugangsnetzwerk (30) empfangenen Korrekturinformation, eine Empfangsfrequenz durch das Endgerät (20) eines durch das Zugangsnetzwerk (30) gesendeten Verbreitungssignals zu erzeugen,

wobei das System **dadurch gekennzeichnet, dass**, da die theoretische Sendefrequenz der Abfragenachricht von vornherein von dem Zugangsnetzwerk (30) nicht bekannt ist, die Abfragenachricht eine Information beinhaltet, die es dem Zugangsnetzwerk (30) ermöglicht, die theoretische Frequenz, mit der die Abfragenachricht theoretisch durch das Endgerät (20) gesendet worden ist, zu bestimmen.

6. System (10) nach Anspruch 5, wobei die von dem Zugangsnetzwerk (30) empfangene Korrekturinformation von dem Endgerät (20) verwendet wird, um weiter eine Sendefrequenz durch das Endgerät (20) einer Nachricht an das Zugangsnetzwerk (30) zu erzeugen.

**Claims**

1. Method (50) for correcting an error in the generation of a frequency by frequency synthesis means of a terminal (20) of a terrestrial wireless communication system (10), said wireless communication system comprising an access network (30) suitable for exchanging data with said terminal, said method (50) comprising:

- transmitting (51), by the terminal (20) and intended for the access network (30), of a query message on a frequency generated by the frequency synthesis means,

- estimating (52), by the access network (30), of the error in the generation of the frequency of the query message as a function of a theoretical transmission frequency of the query message by the terminal (20) and an actual frequency of reception of said query message by the access network (30),

- transmitting (53), by the access network (30) and intended for said terminal (20), of a response message comprising an item of correction information of said estimated error,

- generating (54), by the frequency synthesis means of the terminal (20) and as a function of the item of correction information received from the access network (30), of a frequency of reception by the terminal (20) of a broadcast signal transmitted by the access network (30),

**characterized in that** the theoretical transmission frequency of the query message is not known a priori by the access network (30), said query message comprises an item of information allowing said access network (30) to determine the theoretical frequency over which said query message has been theoretically transmitted by the terminal (20).

2. Method (50) according to claim 1, wherein the item of correction information received from the access network (30) is used by the terminal (20) in order to generate in addition a transmission frequency by the terminal (20) of a message intended for the access network (30).

3. Method (50) according to one of the preceding claims, wherein the item of correction information contains the error estimated by the access network (30).

4. Method (50) according to one of the preceding claims, wherein the item of correction information contains a corrected value of the frequency of reception by the terminal (20) of the broadcast signal transmitted by the access network (30).

5. Terrestrial wireless communication system (10) comprising an access network (30) and at least one terminal (20), said terminal (20) comprising frequency synthesis means likely to introduce an error in the generation of a frequency, wherein:

- the terminal (20) comprises means configured to transmit, intended for the access network (30), a query message on a frequency generated by the frequency synthesis means,
- the access network (30) comprises means configured to estimate the error in the generation of the frequency of the query message as a function of a theoretical transmission frequency of the query message by the terminal (20) and an actual frequency of reception of said query message by the access network (30),

- the access network (30) comprises means configured to transmit, intended for said terminal (20), a response message comprising an item of correction information of said estimated error,

- the terminal (20) comprises means configured to generate, by the frequency synthesis means of said terminal (20) and as a function of the item of correction information received from the access network (30), a frequency of reception by the terminal (20) of a broadcast signal transmitted by the access network (30),

said system being **characterized in that** the theoretical transmission frequency of the query message is not known a priori by the access network (30), said query message comprises an item of information allowing said access network (30) to determine the theoretical frequency over which said query message has been theoretically transmitted by the terminal (20).

6. System (10) according to claim 5, wherein the item of correction information received from the access network (30) is used by the terminal (20) in order to generate in addition a transmission frequency by the terminal (20) of a message intended for the access network (30).

**Fig. 1**

**Fig. 2**

terminal

————————————————————————————————————————

| Emission de message d'interrogation |  ⌒51

réseau d'accès

| Estimation d'erreur sur la génération de fréquence du terminal |  ⌒52

⌒50

| Emission d'information de correction d'erreur |  ⌒53

terminal

————————————————————————————————————————

| Génération de fréquence en fonction de l'information de correction d'erreur |  ⌒54

## Fig. 3

**RÉFÉRENCES CITÉES DANS LA DESCRIPTION**

**Documents brevets cités dans la description**

- US 2014003403 A1

- US 5450617 A